# EUROPÄISCHE PATENTSCHRIFT

(11) **EP 1 109 128 B1**
(45) Veröffentlichungstag und Bekanntmachung des Hinweises auf die Patenterteilung: **23.08.2006**
(21) Anmeldenummer: 99125115.8
(22) Anmeldetag: 16.12.1999
(51) Int. Cl.: G06K 19/07

(54) **Chipkarte mit zwei Demodulationseinrichtungen**
Chip card with two demodulators
Carte à puce avec deux démodulateurs

(43) Veröffentlichungstag der Anmeldung: 20.06.2001
(73) Patentinhaber: Infineon Technologies AG, 81669 München (DE)
(72) Erfinder: Reiner, Robert, 85579 Neubiberg (DE)
(74) Vertreter: Maiwald, Walter

(56) Entgegenhaltungen:
- US-A- 5 220 158
- US-A- 5 874 725

## Beschreibung

Die Erfindung betrifft eine Chipkarte gemäß dem Oberbegriff des Anspruchs 1.

Gattungsgemäße Chipkarten mit einem ASK-Tastgrad von 10% (ASK = Amplitude-Shift-Keying = Amplitudentastung) sind beispielsweise aus dem Normentwurf ISO 14443 betreffend kontaktlose Proximity-Chipkarten bekannt.

Die Kommunikation eines Lesegerätes mit einer derartigen Chipkarte erfolgt durch Modulation im Lesegerät, Funkübertragung zur Chipkarte und Demodulation auf der Chipkarte. Die Energieversorgung einer Chipkarte erfolgt zum Beispiel durch die Energie der von ihr empfangenen Sendesignale des Lesegerätes oder eine Batterie.

Bei Verwendung der Amplitudentastung (ASK) als Übertragungsverfahren wird im Lesegerät die Amplitude einer Trägerschwingung durch ein binäres, zu übertragene Informationen repräsentierendes Codesignal zwischen zwei Spannungswerten umgeschaltet, wobei das Verhältnis (U1-U2)/(U!+U2) der beiden Spannungswerte als Tastgrad bezeichnet wird, der z.B. gemäß ISO 14443 10% sein kann. Dieses Signal wird auf der Chipkarte wieder demoduliert.

Bei der Demodulation auf der Chipkarte ergibt sich das Problem, dass der Pegel (bzw. Amplitudenwert, Intensität) des auf der Chipkarte empfangenen Signals (= des Eingangssignals) erheblich aufgrund unterschiedlichter externer Faktoren schwanken kann, insbesondere aufgrund des Abstands der Chipkarte vom Lesegerät oder beim Power-Up. Der Arbeitsbereich oder der Aussteuerungsbereich und damit die Empfindlichkeit des Flankendetektors (bzw. einer dem Flankendetektor vorgeschalteten Empfindlichkeitseinstellungseinrichtung) in einer Demodulationseinrichtung auf der Chipkarte ist an den jeweils aktuellen Pegel des auf der Chipkarte empfangenen Eingangsignals (in einer sogenannten Feelphase) anzupassen.

Aus US 5,220,158 ist eine kontaktlose IC-Karte bekannt, umfassend eine Antenne, über welche Daten gesendet und empfangen werden, einen ersten und zweiten Demodulationseinrichtung, welche die empfangenen Daten demodulieren und eine Auswähleinrichtung, welche ausgebildet ist zum Auswählen eines Ausgangssignals einer Demodulationseinrichtung.

Nachteilig an der bekannten Lösung ist, das bei einem ansteigenden oder abfallenden Eingangssignal-Pegel zeitlicher Lücken während einer Arbeitsbereichseinstellung der Demodulationseinrichtung auf der Chipkarte entstehen.

Der interne Stand der Technik der Anmelderin umfasst hierzu eine Unterbrechung der Demodulation während der Neu- Einstellung ihrer Empfindlichkeit, was jedoch zu Störungen im Betrieb und erhöhter Bitfehlerrate führt.

Eine weitere interne Lösung der Anmelderin mit quasilogarithmischem A-D-Wandler birgt den Nachteil, dass bei einer Umschaltung der Empfindlichkeit zwischen unterschiedlichen Aussteuerungsbereichs- Stufen aufgrund von Fertigungstoleranzen oder -fehlern nichtmonotone Schritte auftreten können.

Eine Aufgabe der vorliegenden Erfindung ist es, bei einem ansteigenden oder abfallenden Eingangssignal-Pegel eine Signalerkennung unter Vermeidung zeitlicher Lücken während einer Aussteuerungs- oder Arbeitsbereichseinstellung eines Flankendetektors einer Demodulationseinrichtung auf der Chipkarte zu ermöglichen.

Die Aufgabe wird bei einer gattungsgemäßen Chipkarte gemäß dem Kennzeichen des Anspruchs 1 gelöst.

Die Erfindung erlaubt durch zwei versetzt umzuschaltende Demodulationseinrichtungen auf einer Chipkarte eine Aussteuerungsbcreichseinstellung bei steigendem und/oder fallendem Pegel des Eingangssignals auf der Chipkarte unter Vermeidung zeitlicher Lücken in der Signalerkennung (durch Unterbrechung der Demodulation während der Zeitspanne einer Neueinstellung der Empfindlichkeit einer Demodulationseinrichtung der Chipkarte beim Stand der Technik) und unter Vermeidung einer erhöhten Bitfehlerrate. Dabei wird eine monotone Funktion des Ausgangssignals der Demodulationseinrichtungen ohne hohe Präzisionsanforderungen an die Chipkarte erreicht.

Die Erfindung ermöglicht einen sehr einfachen Schaltungsaufbau und Steuerungsaufbau (der Auswähleinrichtung). Die Steuerung erfolgt dabei direkt durch das Eingangssignal. Der Chipflächen- Bedarf und die Verlustleistung der erfindungsgemäßen Schaltung sind gering.

Dabei ist die erfindungsgemäße Chipkarte nicht auf bestimmte Bit-, Byte- oder Framecodierungen des empfangenen Eingangssignals angewiesen, sondern überaus universell.

Vorteilhafte Details ergeben sich insbesondere aus den Unteransprüchen.

Zweckmäßig ist es, wenn das Eingangssignal über je zwei Empfindlichkeitseinstellungseinrichtungen gleichzeitig an jeweils einem Flankendetektor anliegt, welchen Flankendetektoren jeweils eine Aussteuerungsüberwachungseinrichtung zur Überwachung der Aussteuerung des Ausgangssignals einem Flankendetektor vorgeschaltet ist, wobei eine der Aussteuerungsüberwachungseinrichtung nachgeschaltete Steuerung jeweils mit der dem Flankendetektor vorgeschalteten Empfindlichkeitseinstellungseinrichtung zur Einstellung von deren Empfindlichkeit verbunden ist, wobei aufgrund der von den Aussteuerungsüberwachungseinrichtungen detektierten Aussteuerungen der beiden Flankendetektoren das Ausgangssignal eines der beiden Flankendetektoren von einer Auswähleinrichtung als Ausgangssignal auswählbar ist und wobei nur die Empfindlichkeit derjenigen Empfindlichkeitseinstellungseinrichtung deren nachgeschalteter Flankendetektor aktuell nicht ausgewählt ist einstellbar ist.

Eine Umschaltung zwischen den beiden Demodulationseinrichtungen bei ansteigendem Eingangssignal wird dadurch zuverlässig gewährleistet, dass die 2. obere Umschaltschwelle, bei deren Überschreitung an einem Flankendetektor eine Aussteuerungsüberwachungseinrichtung die Empfindlichkeit einer Empfindlichkeitseinstellungseinrichtung um einen bestimmten Faktor reduziert, über der 1. oberen Schwelle für die Umschaltung auf den Ausgang des anderen Flankendetektors liegt.

Entsprechend wird eine versetzte Umschaltung der beiden Demodulationseinrichtungen bei fallendem Eingangssignal dadurch gewährleistet, dass die 2. untere Umschaltschwelle, bei deren Unterschreitung an einem Flankendetektor eine Steuerung die Empfindlichkeit einer Empfindlichkeits-Einstellungseinrichtung um einen bestimmten Faktor empfindlicher schaltet, unter der 1. unteren Schwelle für die Umschaltung auf den Ausgang des anderen Flankendetektors liegt.

Alternativ zu den doppelten Umschaltschwellen (1. und 2. obere bzw. 1. und 2. untere Umschaltschwelle) können einfache Umschaltschwellen verwendet werden (nur die 1. obere und die 1. untere Umschaltschwelle), wenn durch eine Ablaufsteuerung dafür gesorgt wird, dass bei Überschreitung einer dieser Schwellen zuerst auf den Ausgang des anderen Flankendetektors und danach die Empfindlichkeit umgeschaltet wird.

Erfindungsgemäße Chipkarten können insbesondere Controllerkarten oder Memorykarten sein. Memorykarten (= Speicherkarten) greifen in der Regel über eine nichtumprogrammierbare sequentielle Logik (= State-Machine) auf einen Speicher auf der Memorykarte zu und sind zwar etwas inflexibler als Controllerkarten aber besonders preisgünstig und damit für preissensitive Massenanwendungen einsetzbar. Controllerkarten (= Mikroprozessorkarten) umfassen einen Mikroprozessor, ein Betriebssystem und einen Speicher für applikationsspezifische Programmteile, sind sehr universell und insbesondere für sicherheitssensitive Anwendungen wie EC-Karten und GSM-SIMS einsetzbar.

Die Erfindung ist auch in Transpondern für die kontaktlose Identifikation, sogenannten RFID-Tags einsetzbar.

Weitere Merkmale und Vorteile der Erfindung ergeben sich aus den weiteren Unteransprüchen und der nachfolgenden Beschreibung eines Ausführungsbeispiels anhand der Zeichnung. Dabei zeigt:
Fig. 1 ein Blockschaltbild der erfindungsgemäßen Demodulation auf einer Chipkarte
Fig. 2 ein ansteigendes Eingangssignal und das Umschalten zwischen zwei Demodulationseinrichtungen bei deren abwechselnder Empfindlichkeitseinstellung
Fig. 3 einen einfach aufgebauten Flankendetektor
Fig. 4 einen weiteren Flankendetektor
Fig. 5 einen Spannungsteiler zur Empfindlichkeitseinstellung.

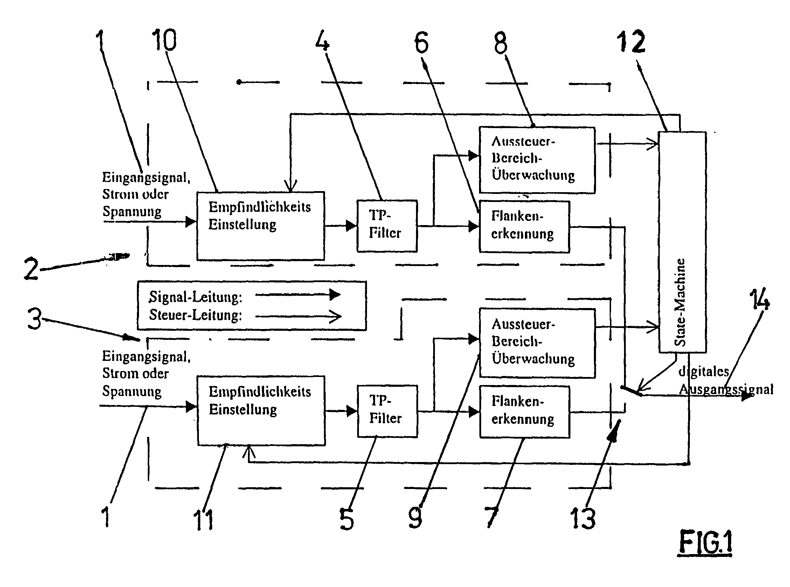

Figur 1 zeigt die parallele Demodulation eines Eingangssignals 1 durch zwei Demodulationseinrichtungen 2 bzw. 3 mit jeweils einem Tiefpassfilter 4 bzw. 5 und einem Flankendetektor 6 bzw. 7.

Zur Aussteuerungsbereichseinstellung einer Demodulationseinrichtung 2 bzw. 3 enthält diese jeweils eine sich mit dem Flankendetektor 6 bzw. 7 ein Signal der Empfindlichkeitseinstellungseinrichtung teilende Aussteuerungsbereichsüberwachungseinrichtung oder kürzer Aussteuerungsüberwachungseinrichtung 8 bzw. 9 und eine ihrem Flankendetektor 6 bzw. 7 vorgeschaltete, jeweils durch eine Aussteuerungsbereichsüberwachungseinrichtung bzw. Aussteuerungsüberwachungseinrichtung 8 bzw. 9 ansteuerbare Empfindlichkeitseinstellungseinrichtung 10 bzw. 11.

Eine Aussteuerungsüberwachungseinrichtung 8 bzw. 9 bestimmt fortlaufend die Aussteuerung (z.B. die Spannungsamplitude) am Eingang eines Flankendetektors 6 bzw. 7, meldet die Aussteuerung an eine mit ihr verbundene Steuerung 12 (=State-Machine) der Chipkarte und die Steuerung 12 gibt der jeweils zugeordneten Empfindlichkeitseinstellungseinrichtung 10 bzw. 11 den von ihr neu einzustellenden Empfindlichkeitsbereich (z.B. die Spannung, die Widerstandsstufe eines Widerstandes etc.) vor, wenn der dieser Demodulationseinrichtung 2 bzw. 3 aktuell vorgegebene Aussteuerungsbereich nach unten oder oben verlassen wird.

Eine Auswähleinrichtung 12, 13 (umfassend die Steuerung 12 und einen von ihr gesteuerten Umschalter 13) schaltet dabei bei einer Änderung der Empfindlichkeit einer Demodulationseinrichtung 2, 3 das Ausgangssignal der anderen Demodulationseinrichtung 3,2 für die Weiterbearbeitung auf der Chipkarte auf den digitalen Ausgang 14, um eine kontinuierliche Demodulation ohne Unterbrechung während einer Empfindlichkeitseinstellung zu realisieren.

Um zu vermeiden, dass die Empfindlichkeiten (in 10, 11) einer Demodulationseinrichtung 2, 3 bei stärker oder schwächer werdendem Eingangssignal 1 vor oder gleichzeitig mit dem Ausgangssignal umgeschaltet werden, sind (in 8, 9 oder 12) unterschiedliche (die aktuell vorgegebenen Grenzen der der Aussteuerungsbereiche definierende) Umschaltschwellen 16 und 17 bzw. 18 und 19 vorgesehen. Die Umschaltung des Ausgangssignals und die Einstellung der Empfindlichkeit erfolgen damit bei stärker oder schwächer werdendem Eingangssignal zueinander zeitversetzt.

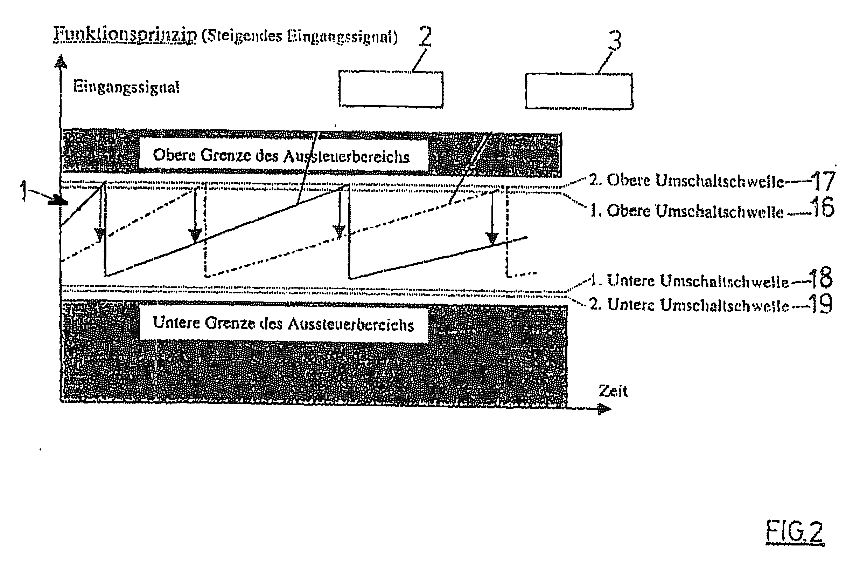

Figur 2 verdeutlicht dies am Beispiel eines stärker werdenden, also ansteigenden Eingangssignals.

Der Ausgang ist zunächst auf die erste Demodulationseinrichtung 2 geschaltet. Aufgrund unterschiedlich (versetzt) eingestellter Empfindlichkeiten der beiden Demodulationsseinrichtungen ist das Eingangssignal an den Eingängen der Flankendetektoren 6, 7 unterschiedlich stark. Wenn es (in Figur 2 von links nach rechts im Laufe der Zeit) wächst, erreicht es für die die erste Demodulationseinrichtung 2 vorgegebene obere Umschaltschwelle 16, worauf die Steuerung 12 über dem Umschalter 13 den Ausgang 14 auf die andere Demodluationseinrichtung 3 umschaltet und dann, wenn die obere Umschaltschwelle 17 erreicht wird, die Empfindlichkeit der Demodulationseinrichtung 2 neu einstellt, nämlich um eine Aussteuerungsstufe verringert. Damit liegen wieder beide Eingangssignale (für 6 und 7) zwischen den oberen und unteren Umschaltschwellen. Wenn das Eingangssignal noch stärker wird, erreicht es auch in der Demodulationseinrichtung 3 die 1. obere Umschaltschwelle 16, worauf die Steuerung 12 den Ausgang auf die erste Demodulationseinrichtung 2 umschaltet und die Empfindlichkeit der Demodulationseinrichtung 3 neu einstellt, nämlich ebenfalls um eine Stufe verringert. Entsprechendes gilt für ein schwächer werdendes Eingangssignal umgekehrt.

Die oberen Umschaltschwellen 16, 17 (und entsprechend die unteren) können alternativ durch eine einzige ersetzt werden, falls die Umschaltung des Ausgangs und die Neueinstellungen der Empfindlichkeit für die beiden Demodulationseinrichtungen 2, 3 zeitlich zueinander versetzt ausgeführt werden, indem diese Schaltvorgänge beispielsweise nacheinander von der Steuerung 12 veranlasst werden.

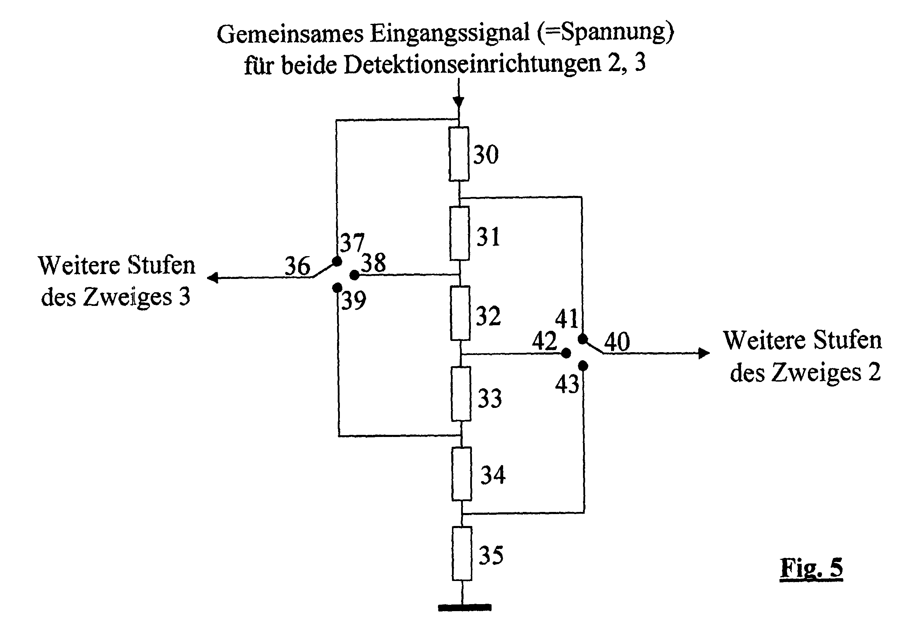

Die Umschaltung der Empfindlichkeit in den Empfindlichkeitseinstellungseinrichtungen 10, 11 kann unterschiedlichst ausgebildet sein. So kann die Signal-Auskoppelung des Eingangssignals (Stromspiegel) oder die Anzapfung eines Spannungsteilers (an dem Spannung in Spannung umgesetzt wird) oder die Anzapfung eines Widerstandes (in dem Strom in Spannung umgesetzt wird) wie in Figur 5 oder die Anzapfung eines Kondensators (in dem Ladung in Spannung umgesetzt wird) in mehreren Stufen umschaltbar sein.

Figur 5 zeigt die Anzapfung eines gemeinsamen Eingangssignals für die Demodulationseinrichtungen 2, 3 über einen gemeinsamen mehrstufigen Widerstandsspannungsteiler mit Widerständen 30-35. Während über den Umschalter 36 zwischen den Anzapfungsstufen 37, 38, 39 umgeschaltet werden kann, kann durch den Umschalter 40 zwischen den Anzapfungen 41, 42, 42 umgeschaltet werden. Jede der Anzapfungsstufen 37, 38, 39 für die eine Demodulationsschaltung 3 ist also von jeder der Anzapfungsstufen 41, 42, 43 für die andere Demodulationsschaltung 2 verschieden. Die Empfindlichkeit einer Anzapfungsstufe 38 für eine Demodulationsschaltung 3 und die Empfindlichkeit der ihr benachbarten Anzapfungsstufen 41, 42 für die andere Demodulationseinrichtung stehen vorzugsweise zueinander in geometrischem Verhältnis.

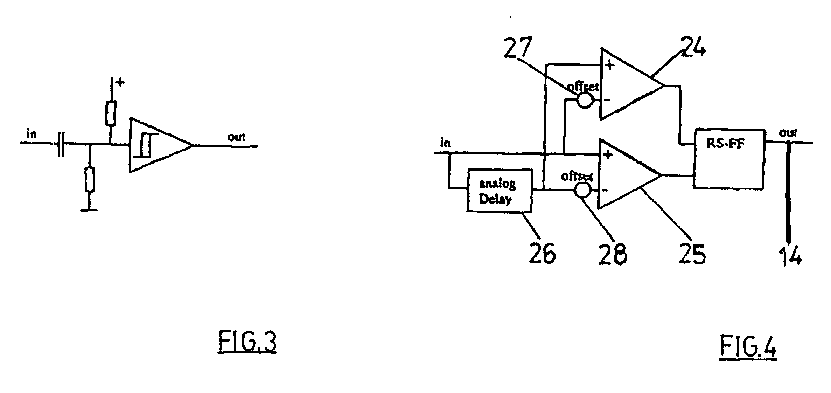

Figuren 3 und 4 zeigen Beispiele für besonders geeignete Flankendetektoren. Gemäß Figur 3 erfolgt die Flankendetektion besonders einfach über einen Kondensator mit Widerstandslast (Differenzierglied) und einen Schmitt-Trigger.

Der Flankendetektor gemäß Figur 4 erkennt mit einem Verzögerungsglied 26 (Tiefpass), zwei Komparatoren 24, 25 und einem RS-Flip-Flop Flanken im Eingangssignal und gibt ein digitales Ausgangssignal 14 aus.

Zusammenfassend kann also bei fallendem oder ansteigendem Eingangssignalpegel auf einer Chipkarte eine Eingangssignalerkennung ohne zeitliche Lücken dadurch erreicht werden, dass die Chipkarte zwei Demodulationseinrichtungen mit vorzugsweise unterschiedlichem Aussteuerungsbereich aufweist, so dass nur eine Demodulationseinrichtung ihre Empfindlichkeit einstellt, während das Ausgangssignal der anderen zur Weiterverfolgung ausgewählt wird.

### Bezugszeichenliste

- 1: Eingangssignal
- 2: Demodulationseinrichtung
- 3: Demodulationseinrichtung
- 4: Tiefpassfilter
- 5: Tiefpassfilter
- 6: Flankendetektor
- 7: Flankendetektor
- 8: Aussteuerungs (-bereichs)überwachungseinrichtung
- 9: Aussteuerungs(-bereichs)überwachungseinrichtung
- 10: Empfindlichkeitseinstellungseinrichtung
- 11: Empfindlichkeitseinstellungseinrichtung
- 12: Auswähleinrichtung (Steuerung)
- 13: Auswähleinrichtung (Umschalter)
- 14: Ausgang
- 16: erste obere Umschaltschwelle
- 17: zweite obere Umschaltschwelle
- 18: erste untere Umschaltschwelle
- 19: zweite untere Umschaltschwelle
- 20:
- 30-35: Widerstände für die Teilung der Eingangssignalspannung
- 36: Umschalter
- 37-39: Spannungsteiler- Anzapfungen
- 40: Umschalter
- 41-43: Spannungsteiler Anzapfung

## Patentansprüche

1. Chipkarte mit mindestens einer Demodulationseinrichtung (2,3) durch welche (2,3) ein an ihr anliegendes Eingangssignal (1) in ein ausgangsseitiges (14) Ausgangssignal demodulierbar ist, wobei
die Chipkarte mindestens zwei Demodulationseinrichtungen (2,3) und eine Auswähleinrichtung (12, 13) zum Auswählen des Ausgangssignals einer (2) der Demodulationseinrichtungen (2,3) aufweist,
**dadurch gekennzeichnet, dass**
deren (2) Aussteuerungsbereich gerade nicht eingestellt wird,
wobei nur jeweils der Aussteuerungsbereich einer Demodulationseinrichtung (3) durch Veränderung von deren Empfindlichkeit mittels einer Empfindlichkeitseinstellungseinrichtung (11) variierbar ist, deren (3) Ausgangssignal aktuell nicht durch die Auswähleinrichtung (12, 13) ausgewählt ist und deren (3) aktuell vorgegebener Aussteuerungsbereich durch das Eingangssignal (1) verlassen wird.

2. Chipkarte nach Anspruch 1,
**dadurch gekennzeichnet, dass** sie Aussteuerungsüberwachungseinrichtungen (8,9) zum Überwachen der Aussteuerung der beiden Demodulationseinrichtungen (2,3) aufweist, welche so ausgebildet sind, dass beim Verlassen des Aussteuerungsbereichs der aktuell ausgewählten Demodulationseinrichtung (2) die andere Demodulationseinrichtung (3) ausgewählt wird.

3. Chipkarte nach einem der vorhergehenden Ansprüche
wobei die Demodulationseinrichtung Flankendetektoren, Empfindlichkeitseinstelleinrichtungen und Aussteuerüberwachungseinrichtungen umfasst,
**dadurch gekennzeichnet, dass**
das Eingangssignal (1) über je zwei Empfindlichkeitseinstellungseinrichtungen (10, 11) gleichzeitig an jeweils einem Flankendetektor (6,7) anliegt,
wobei sich Flankendetektoren (6,7) und Aussteuerungsüberwachungseinrichtng (8,9) jeweils ein Signal der Empfindlichkeiteseinstellungseinrichtung (10,11) zur Überwachung der Aussteuerung des an einem Flankendetektor (6,7) anliegenden Signals teilen,
wobei eine den Aussteuerungsüberwachungseinrichtungen (8,9) nachgeschaltete als Steuerung ausgebildete Auswähleinrichtung (12) jeweils mit der dem Flankendetektor (6,7) vorgeschalteten Empfindlichkeitseinstellungseinrichtungen (10, 11) zur Einstellung der Empfindlichkeit verbunden ist,
wobei aufgrund der von den Aussteuerungsüberwachungseinrichtungen (8, 9) detektierten Aussteuerungen der beiden Flankendetektoren (6, 7) das Ausgangssignal eines der beiden Flankendetektoren (6,7) von einer der Auswähleinrichtungen (12,13) als Ausgangssignal (14) auswählbar ist
und wobei nur die Empfindlichkeit derjenigen Empfindlichkeitseinstellungseinrichtung (10, 11), deren nachgeschalteter Flankendetektor (6,7) aktuell nicht als Ausgangssignal (14) ausgewählt ist einstellbar ist.

4. Chipkarte nach einem der vorhergehenden Ansprüche,
**dadurch gekennzeichnet, dass** sich die Aussteuerungsbereiche der beiden Demodulationseinrichtungen (2,3) aufgrund sich teilweise überlappender, einstellbarer Empfindlichkeitsbereiche der Empfindlichkeitseinstelleinrichtungen (10,11) der beiden Demodulationseinrichtungen (2,3) teilweise überlappen.

5. Chipkarte nach einem der vorhergehenden Ansprüche,
**dadurch gekennzeichnet, dass**
eine obere Umschaltschwelle (16) eines Flankendetektors (7), bei deren Überschreitung eine Steuerung (12)auf den anderen Flankendetektor (8) umschaltet, unter einer oberen Umschaltschwelle (17), bei deren Überschreitung die Empfindlichkeit für den ersten Flankendetektor (7) verringert wird, liegt.

6. Chipkarte nach einem der vorhergehenden Ansprüche,
**dadurch gekennzeichnet, dass**
eine untere Umschaltschwelle (18) für einen Flankendetektor (7), bei deren Unterschreitung die als Steuerung ausgebildete Auswähleinrichtung (12) auf den anderen Flankendetektor (8) umschaltet, über einer unteren Umschaltschwelle (19), bei deren Unterschreitung die Empfindlichkeit für den erstgenannten Flankendetektor (7) verringert wird, liegt.

7. Chipkarte nach einem der vorhergehenden Ansprüche,
**dadurch gekennzeichnet, dass**
die oberen Umschaltschwellen (16, 17) und/oder die unteren Umschaltschwellen (18, 19) der beiden Demodulationseinrichtungen (2,3) gleich hoch sind.

8. Chipkarte nach einem der vorhergehenden Ansprüche,
**dadurch gekennzeichnet, dass**
die Chipkarte eine Schrittsteuerung (in 12) zum zeitlichen Versetzen der Neu-Einstellung der Empfindlichkeit einer Demodulationseinrichtung (2) bei stärker oder schwächer werdendem Eingangssignal (1) gegenüber der Umschaltung auf die andere Demodulationseinrichtung (3) aufweist.

9. Chipkarte nach einem der vorhergehenden Ansprüche,
**dadurch gekennzeichnet, dass**
die einstellbaren Empfindlichkeiten geometrisch gestuft sind, also z.B. die Widerstände zweier benachbarter Anzapfungsstufen für das Eingangssignal zueinander im gleichen Verhältnis stehen.

10. Chipkarte nach einem der vorhergehenden Ansprüche,
**dadurch gekennzeichnet, dass**
die Empfindlichkeit der Empfindlichkeitseinstellungseinrichtung (10, 11) durch Umschaltung der Signal-Auskopplung des an ihr anliegenden Stromes einstellbar ist.

11. Chipkarte nach einem der vorhergehenden Ansprüche 1 bis 9,
**dadurch gekennzeichnet, dass**
dass das die Empfindlichkeit der Empfindlichkeitseinstellungseinrichtung (10,11) durch einen Spannungsteiler für die an der Empfindlichkeitseinstellungseinrichtung anliegende Spannung einstellbar ist.

12. Chipkarte nach einem der vorhergehenden Ansprüche 1 bis 9,
**dadurch gekennzeichnet, dass**
die Empfindlichkeit der Empfindlichkeitseinstellungseinrictung (10,11) durch einen variablen Widerstand einstellbar ist, der vom Eingangssignal-Strom durchflossen ist.

13. Chipkarte nach einem der vorhergehenden Ansprüche1 bis 9,
**dadurch gekennzeichnet, dass**
die Empfindlichkeit der Empfindlichkeitseinstellungseinrichtung (10,11) durch einen Kondensator dessen Ladung in eine Spannung umgesetzt wird, einstellbar ist.

14. Chipkarte nach einem der vorhergehenden Ansprüche 3 bis 13,
**dadurch gekennzeichnet, dass**
der Flankendetektor (6,7) einen Kondensator mit je einem nachgeschalteten Widerstand auf High- bzw. Masse-Pegel und einen Schmitt-Trigger aufweist.

15. Chipkarte nach einem der vorhergehenden Ansprüche 3 bis 13,
**dadurch gekennzeichnet, dass**
der Flankendetektor zwei Komponenten (24,25) enthält, wobei am negativen Eingang des einen (24) und am positiven Eingang des anderen (25) das empfindlichkeitsgeregelte Eingangssignal anliegt, während an den anderen Eingängen jeweils das von einem Verzögerungs-Glied (26) verzögerte Eingangssignal anliegt, wobei der positive Eingang des Komparators (24) und der negative Eingang des Komparators (25) über einen Offset (27,28) beschaltet ist und wobei die Ausgänge der beiden Komparatoren (24, 25) an den Eingängen eines RS-Flipflops (29) anliegen.

16. Chipkarte nach einem der vorhergehenden Ansprüche,
**dadurch gekennzeichnet, dass**
zwischen eine Empfindlichkeitseinstellungseinrichtung (10, 11) und einen Flankendetektor (6, 7) ein Tiefpass (4, 5) geschaltet it.

17. Chipkarte nach einem der vorhergehenden Ansprüche,
**dadurch gekennzeichnet, dass**
Umschaltung des Ausgangssignals und die Einstellung der Empfindlichkeit bei stärker oder schwächer werdendem Eingangssignal zueinander zeitversetzt erfolgen.

## Claims

1. A chip card comprising at least one demodulation means (2, 3), which (2, 3) is able to demodulate an input signal (1) applied to it into an output-side (14) output signal, wherein
the chip card has at least two demodulation means (2, 3) and one selection means (12, 13) for selecting the output signal of one (2) of said demodulation means (2, 3),
**characterized in that**
its (2) dynamic range is currently not adjusted,
whereby the dynamic range of only one demodulation means (3) is variable at a time by means of changing its sensitivity by a sensitivity adjustment means (11), the output signal of which (3) is not currently selected by the selection means (12, 13) and the currently predetermined dynamic range of which (3) is left by the input signal (1).

2. The chip card according to claim 1,
**characterized in that**
it comprises control monitoring means (8, 9) for monitoring the control of the two demodulation means (2, 3), which are configured such that when the dynamic range of the currently selected demodulation means (2) is left the other demodulation means (3) is selected.

3. The chip card according to any one of the preceding claims,
wherein the demodulation means comprises edge detectors, sensitivity adjustment means and control monitoring means,
**characterized in that**
the input signal (1) is applied simultaneously to one edge detector (6, 7) via two sensitivity adjustment means (10, 11),
wherein said edge detectors (6, 7) and control monitoring means (8, 9) each share one signal of the sensitivity adjustment means (10, 11) for monitoring the control of the signal applied to an edge detector (6, 7),
wherein a selection means (12) downstream of the control monitoring means (8, 9) and configured as a controller is connected to the sensitivity monitoring means (10, 11) upstream of the edge detector (6, 7) for adjusting the sensitivity,
wherein due to the control operations detected by the control monitoring means (8, 9) of the two edge detectors (6, 7) the output signal of one of the two edge detectors (6, 7) is selectable by one of the selection means (12, 13) as an output signal (14),
and wherein the sensitivity of only that sensitivity adjustment means (10, 11), the edge detector (6, 7) of which is not currently selected as the output signal (14), is adjustable.

4. The chip card according to any one of the preceding claims,
**characterized in that**
the dynamic ranges of the two demodulation means (2, 3) partially overlap due to partially overlapping adjustable sensitivity ranges of the sensitivity adjustment means (10, 11) of the two demodulation means (2, 3).

5. The chip card according to any one of the preceding claims,
**characterized in that**
an upper switchover threshold (16) of an edge detector (7), which when exceeded causes a controller (12) to switch over to the other edge detector (8), is below an upper switchover threshold (17), which when exceeded causes the sensitivity of the first edge detector (7) to be reduced.

6. The chip card according to any one of the preceding claims,
**characterized in that**
a lower switchover threshold (18) for an edge detector (7), which when undershot causes a selection means (12) formed as a controller to switch over to the other edge detector (8), is above a lower switchover threshold (19), which when undershot causes the sensitivity of the first edge detector (7) to be reduced.

7. The chip card according to any one of the preceding claims,
**characterized in that**
the upper switchover thresholds (16, 17) and/or the lower switchover thresholds (18, 19) of the two demodulation means (2, 3) have the same level.

8. The chip card according to any one of the preceding claims,
**characterized in that**
the chip card has a step control (in 12) for time shifting the readjustment of the sensitivity of one demodulation means (2) when the input signal (1) gets stronger or weaker with respect to the switchover to the other demodulation means (3).

9. The chip card according to any one of the preceding claims,
**characterized in that**
the adjustable sensitivities are stepped geometrically, e.g. the resistances of two adjacent tap stages for the input signal have the same ratio with respect to each other.

10. The chip card according to any one of the preceding claims,
**characterized in that**
the sensitivity of the sensitivity adjustment means (10, 11) is adjustable by means of switching over the signal extraction of the current applied to it.

11. The chip card according to any one of claims 1 to 9,
**characterized in that**
the sensitivity of the sensitivity adjustment means (10,11) is adjustable by means of a voltage divider for the voltage applied to the sensitivity adjustment means.

12. The chip card according to any one of claims 1 to 9,
**characterized in that**
the sensitivity of the sensitivity adjustment means (10, 11) is adjustable by means of a variable resistor, through which the input current flows.

13. The chip card according to any one of claims 1 to 9,
**characterized in that**
the sensitivity of the sensitivity adjustment means (10, 11) is adjustable by means of a capacitor, the charge of which is converted into a voltage.

14. The chip card according to any one of claims 3 to 13,
**characterized in that**
the edge detector (6, 7) comprises a capacitor each having a downstream resistor on a high and low level, respectively, and a Schmitt trigger.

15. The chip card according to any one of claims 3 to 13,
**characterized in that**
the edge detector includes two components (24, 25), wherein the sensitivity-controlled input signal is applied to the negative input of the one (24) and to the positive input of the other (25), while the input signal delayed by a delay member (26) is applied to each of the other inputs, wherein the positive input of the comparator (24) and the negative input of the comparator (25) is connected via an offset (27, 28) and wherein the outputs of the two comparators (24, 25) are applied to the inputs of an RS flipflop (29).

16. The chip card according to any one of the preceding claims,
**characterized in that**
a low-pass (4, 5) is connected between a sensitivity adjustment means (10, 11) and an edge detector (6, 7).

17. The chip card according to any one of the preceding claims,
**characterized in that**
the switchover of the output signal and the adjustment of the sensitivity, when the input signal gets stronger or weaker, are time-shifted with respect to each other.

## Revendications

1. Carte à circuit intégré comprenant au moins un dispositif de démodulation (2, 3) par lequel (2, 3) un signal d'entrée (1) qui vient s'y appliquer peut être soumis à une démodulation pour obtenir un signal de sortie côté sortie (14), la carte à circuit intégré présentant au moins deux dispositifs de démodulation (2, 3) et un dispositif de sélection (12, 13) pour la sélection du signal de sortie d'un dispositif de démodulation (2) parmi les dispositifs de démodulation (2, 3), **caractérisée en ce que** la plage de modulation du dispositif de démodulation (2) en particulier n'est pas réglée, seule la plage de modulation respective d'un dispositif de démodulation (3) dont le signal de sortie n'est pas actuellement sélectionné par le dispositif de sélection (12, 13) et dont la plage de modulation actuellement prédéfinie est désertée par le signal d'entrée (1), pouvant être soumise à des variations via la modification de sa sensibilité au moyen d'un dispositif de réglage de la sensibilité (11).

2. Carte à circuit intégré selon la revendication 1, **caractérisée en ce qu'**elle présente des dispositifs de surveillance de la modulation (8, 9) pour surveiller la modulation des deux dispositifs de modulation (2, 3), les dispositifs étant réalisés de telle sorte que, lorsque la plage de modulation du dispositif de démodulation (2) actuellement sélectionnée est désertée, l'autre dispositif de démodulation (3) est sélectionné.

3. Carte à circuit intégré selon l'une quelconque des revendications précédentes, dans laquelle le dispositif de démodulation comprend des détecteurs de flancs d'impulsions, des dispositifs de réglage de la sensibilité et des dispositifs de surveillance de la modulation, **caractérisée en ce que** le signal d'entrée (1) vient se placer, via deux dispositifs de réglage de la sensibilité (10, 11) simultanément contre respectivement un détecteur de flancs d'impulsions (6, 7), des détecteurs de flancs d'impulsions (6, 7) et des mécanismes de surveillance de la modulation (8, 9) se partageant respectivement- un signal du dispositif de réglage de la sensibilité (10, 11) pour la surveillance de la modulation du signal venant se placer contre un détecteur de flancs d'impulsions (6, 7), un dispositif de sélection (12), réalisé sous la forme d'une commande, monté à la suite des dispositifs de surveillance de la modulation (8, 9) étant respectivement reliés aux dispositifs de réglage de la sensibilité (10, 11) montés en amont du détecteur de flancs d'impulsions (6, 7) pour le réglage de la sensibilité,
le signal de sortie d'un des deux détecteurs de flancs d'impulsions (6, 7) d'un des dispositifs de sélection (12, 13) pouvant être sélectionné à titre de signal de sortie (14) sur base des modulations des deux détecteurs de flancs d'impulsions (6, 7) détectées par les dispositifs de surveillance de modulation (8, 9),
et seule pouvant être réglée la sensibilité du dispositif de réglage de la sensibilité (10, 11) dont le détecteur d'impulsions de flancs (6, 7) monté à la suite n'est pas sélectionné actuellement à titre de signal de sortie (14).

4. Carte à circuit intégré selon l'une quelconque des revendications précédentes, **caractérisée en ce que** les plages de modulation des deux dispositifs de démodulation (2, 3) se chevauchent en partie sur base de plages de sensibilité réglables des dispositifs de réglage de la sensibilité (10, 11) des deux dispositifs de démodulation (2, 3) se chevauchant en partie.

5. Carte à circuit intégré selon l'une quelconque des revendications précédentes, **caractérisée en ce qu'**un seuil supérieur de commutation (16) d'un détecteur de flancs d'impulsions (7), lors du dépassement duquel une commande (12) passe par commutation à l'autre détecteur de flancs d'impulsions (8), est situé en dessous d'un seuil supérieur de commutation (17) lors du dépassement duquel la sensibilité pour le premier détecteur de flancs d'impulsions (7) se réduit.

6. Carte à circuit intégré selon l'une quelconque des revendications précédentes, **caractérisée en ce qu'**un seuil inférieur de commutation (18) pour un détecteur de flancs d'impulsions (7), lors du dépassement duquel, le dispositif de sélection (12) réalisé sous forme de commande passe par commutation à l'autre détecteur de flancs d'impulsions (8), est situé au-dessus d'un seuil inférieur de commutation (19), lors du dépassement duquel la sensibilité pour le détecteur de flancs d'impulsions (7) mentionné en premier lieu se réduit.

7. Carte à circuit intégré selon l'une quelconque des revendications précédentes, **caractérisée en ce que** les seuils supérieurs de commutation (16, 17) et/ou les seuils inférieurs de commutation (18, 19) des deux dispositifs de démodulation sont situés à la même hauteur.

8. Carte à circuit intégré selon l'une quelconque des revendications précédentes, **caractérisée en ce que** la carte à circuit imprimé présente une commande pas à pas (dans 12) pour le décalage dans le temps du nouveau réglage de la sensibilité d'un dispositif de démodulation (2), dans le cas d'un signal d'entrée (1) qui devient plus fort ou plus faible, par rapport au passage par commutation à l'autre dispositif de démodulation (3).

9. Carte à circuit intégré selon l'une quelconque des revendications précédentes, **caractérisée en ce que** les sensibilités réglables sont géométriquement échelonnées, c'est-à-dire que par exemple les résistances de deux branchements voisins pour le signal d'entrée sont disposées dans le même rapport réciproque.

10. Carte à circuit intégré selon l'une quelconque des revendications précédentes, **caractérisée en ce que** la sensibilité du dispositif de réglage de la sensibilité (10, 11) peut être réglé par commutation du découplage du signal par rapport au courant qui s'y applique.

11. Carte à circuit intégré selon l'une quelconque des revendications 1 à 9, **caractérisée en ce que** la sensibilité du dispositif de réglage de la sensibilité (10, 11) peut être réglée par un diviseur de tension pour la tension qui s'applique au dispositif de réglage de la sensibilité.

12. Carte à circuit intégré selon l'une quelconque des revendications 1 à 9, **caractérisée en ce que** la sensibilité du dispositif de réglage de la sensibilité (10, 11) peut être réglée via une résistance variable à travers laquelle circule le courant du signal d'entrée.

13. Carte à circuit intégré selon l'une quelconque des revendications 1 à 9, **caractérisée en ce que** la sensibilité du dispositif de réglage de la sensibilité (10, 11) peut être réglée par un condensateur dont la charge est convertie en tension.

14. Carte à circuit intégré selon l'une quelconque des revendications 3 à 13, **caractérisée en ce que** le détecteur de flancs d'impulsions (6, 7) présente un condensateur comprenant respectivement une résistance montée à la suite au niveau logique haut, respectivement au niveau de la masse et un déclencheur de Schmitt.

15. Carte à circuit intégré selon l'une quelconque des revendications 3 à 13, **caractérisée en ce que** le détecteur de flancs d'impulsions contient deux composants (24, 25), le signal d'entrée réglé en sensibilité venant s'appliquer à l'entrée négative du premier composant (24) et à l'entrée positive de l'autre composant (25), tandis qu'aux autres entrées, vient s'appliquer respectivement le signal d'entrée retardé par un membre de temporisation (26), l'entrée positive du comparateur (24) et l'entrée négative du comparateur (25) étant câblées via un décalage (27, 28) et les sorties des deux comparateurs (24, 25) venant s'appliquer aux entrées d'une bascule bistable (29).

16. Carte à circuit intégré selon l'une quelconque des revendications précédentes, **caractérisée en ce qu'**un filtre passe-bas (4, 5) est monté entre un dispositif de réglage de la sensibilité (10, 11) et un détecteur de flancs d'impulsions (6, 7).

17. Carte à circuit intégré selon l'une quelconque des revendications précédentes, **caractérisée en ce que** la commutation du signal de sortie et le réglage de la sensibilité, dans le cas d'un signal d'entrée qui devient plus fort ou qui devient plus faible, sont mis en oeuvre de manière réciproquement décalée dans le temps.
